# EUROPÄISCHE PATENTSCHRIFT

(11) **EP 3 180 228 B1**
(45) Veröffentlichungstag und Bekanntmachung des Hinweises auf die Patenterteilung: **25.04.2018**
(21) Anmeldenummer: 15747480.0
(22) Anmeldetag: 05.08.2015
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR VÉHICULE AUTOMOBILE

(30) Priorität: 14.08.2014 DE 102014111606
(43) Veröffentlichungstag der Anmeldung: 21.06.2017
(73) Patentinhaber: ThyssenKrupp Presta AG, 9492 Eschen (LI); thyssenkrupp AG, 45143 Essen (DE)
(72) Erfinder: KURZ, Hannes, A-6800 Feldkirch (AT); SCHIELE, Emanuel, 88131 Lindau (DE); ADELMANN, Werner, CH-9469 Haag (CH); NICOLUSSI, Matthias, A-6800 Feldkirch (AT); HEHLE, Karl-mathias, A-6912 Hörbranz (AT)
(74) Vertreter: thyssenkrupp Intellectual Property GmbH
(86) Internationale Anmeldenummer: PCT/EP2015/068093
(87) Internationale Veröffentlichungsnummer: WO 2016/023806

(56) Entgegenhaltungen:
- DE-B3-102007 003 091

## Beschreibung

### Technisches Gebiet

Die vorliegende Erfindung betrifft eine Lenksäule für ein Kraftfahrzeug, welche eine Verstellung der Position des Lenkrades relativ zum Chassis des Kraftfahrzeugs ermöglicht, und insbesondere eine Höhenverstellung des Lenkrades ermöglicht, um die Lenkradposition für jeden Fahrer zu optimieren.

### Stand der Technik

Aus dem Stand der Technik sind Lenksäulen bekannt, welche eine Verstellung der Position des Lenkrades bezüglich des Chassis des Fahrzeuges erlauben. Eine solche Verstellung des Lenkrades in seiner Position ermöglicht es dem Fahrer, die für den jeweiligen Fahrer optimale Lenkradposition einzustellen, um dadurch die Ergonomie beim Fahren zu verbessern und auf diese Weise die Sicherheit beim Führen des Kraftfahrzeuges zu erhöhen.

Bekannte Lenksäulen für Kraftfahrzeuge umfassen dabei ein Halteelement, beispielsweise eine Konsole, welche am Chassis des Kraftfahrzeugs festgelegt wird. An der Konsole ist ein Stellelement gehalten, welches in seiner Position relativ zur Konsole in einem vorgegebenen Umfang verstellbar ist und in welchem die Lenkspindel auf bekannte Weise drehbar gelagert ist. Durch die Verstellung der Position des Stellelementes gegenüber dem Halteelement kann entsprechend eine Positionsverstellung des an der Lenkspindel gehaltenen Lenkrades erreicht werden. Hierbei ist es bekannt, dass das Stellelement sowohl in Axialrichtung der Lenkspindel verstellbar ist, um entsprechend eine Längenverstellung der Lenkradposition vorzunehmen, als auch eine Höhenverstellung des Stellelementes gegenüber dem Halteelement vorzunehmen, um eine Höhenverstellung des Lenkrades vorzunehmen.

Die Höhenverstellung des Lenkrades wird dabei häufig so durchgeführt, dass das Stellelement an seiner dem Fahrer abgewendeten Seite an einer Schwenkachse gehalten ist, um welche herum der vordere Teil des Stellelementes dann verschwenkt werden kann, um entsprechend die Höhenverstellung des Lenkrads vorzunehmen.

Es ist bekannt, die möglichen Verstellbewegungen über eine Verriegelungsvorrichtung so festzulegen, dass die Lenkradposition während der Fahrt unveränderlich bleibt und auch beim Eintragen höherer Kräfte, welche beispielsweise beim Ein- und Aussteigen eingetragen werden, wenn sich der Fahrer am Lenkrad abstützt, die Position so zu halten, dass eine Verstellung des Stellelements gegenüber dem Halteelement nicht stattfindet.

Im Crash-Fall ist eine Lenksäule üblicherweise in Axialrichtung verschiebbar, um beispielsweise unter Verformung eines Crash-Elements einen Teil der Crash-Energie aufnehmen zu können, wenn der Fahrer auf das Lenkrad aufprallt. Auf diese Weise wird gleichzeitig das Lenkrad aus der Gefahrenzone heraus bewegt.

Um die Wirkung eines an sich bekannten Crash-Mechanismus für die Längsverstellung der Lenksäule nicht zu behindern, ist es notwendig, dass die Horizontalposition des Lenkrades im Crash-Fall im Wesentlichen beibehalten wird. Insbesondere soll vermieden werden, dass sich das Lenkrad im Crash-Falle nach oben hin aufstellt.

Um ein solches Aufstellen des Lenkrades zu verhindern, sind aus dem Stand der Technik Arretierelemente mit Formschlusselementen in Form von Verzahnungen bekannt, welche beim Verriegeln der Verriegelungseinrichtung eine formschlüssige Verbindung zwischen dem Halteelement und dem Stellelement bereitstellen.

Eine verstellbare Lenksäule mit einem solchen Arretierelement ist beispielsweise aus der DE 10 2007 003 091 B3 bekannt. Hierbei wird ein Arretierelement in Form einer Zahnlamelle mittels des von einem Spannbolzen, auch als Klemmbolzen bezeichnet, der Verriegelungseinrichtung bereitgestellten Hubes in die Verriegelungsposition gedrückt. Insbesondere ist die Zahnlamelle beim Verriegeln der Lenksäule durch die axiale Verschiebung mit einer Verzahnung der Konsolenseitenwange in Eingriff bringbar. Um ein sicheres Eingreifen der Verzahnung bereitzustellen und auf der anderen Seite aber ein hakelfreies Verstellen des Stellelements gegenüber dem Halteelement in der Öffnungsposition zu ermöglichen, ist ein großer Hub des Klemmsystems notwendig, welcher seinerseits einen großen Hebelbedienwinkel zur Folge haben kann.

In der GB 2 352 284 A ist eine Lenksäule mit einem Arretierelement beschrieben, welches ebenfalls eine Verzahnung aufweist, die beim Verriegeln der Verriegelungseinrichtung mit einer Verzahnung der Konsolenseitenwange in Eingriff bringbar ist. Diese wird jedoch nicht wie in der vorgenannten DE 10 2007 003 091 B3 durch eine durch den Hub der Verriegelungseinrichtung bewirkte axiale Verschiebung in Richtung der Erstreckung des Klemmbolzens in Eingriff gebracht, sondern quer dazu in radialer Richtung.

### Darstellung der Erfindung

Ausgehend von dem aus der DE 10 2007 003 091 B3 bekannten Stand der Technik ist es eine Aufgabe der vorliegenden Erfindung, eine Lenksäule für ein Kraftfahrzeug anzugeben, welche eine Arretierung der Lenksäule bereitstellt, welche vom Hub der Verriegelungseinrichtung unabhängig ist.
Diese Aufgabe wird durch eine Lenksäule für ein Kraftfahrzeug mit den Merkmalen des Anspruchs 1 gelöst. Vorteilhafte Weiterbildungen ergeben sich aus den Unteransprüchen.
Entsprechend wird eine Lenksäule für ein Kraftfahrzeug vorgeschlagen, umfassend ein am Chassis des Kraftfahrzeugs festlegbares Halteelement, ein gegenüber dem Halteelement verstellbares Stellelement zur Aufnahme einer Lenkspindel und eine Verriegelungseinrichtung zum Verriegeln des Stellelements gegenüber dem Halteelement wobei die Verriegelungseinrichtung einen Feststellhebel aufweist, der zwischen einer Verriegelungsstellung, in welcher das Stellelement bezüglich des Halteelementes verriegelt ist, und einer Öffnungsstellung, in welcher das Stellelement bezüglich des Halteelements verstellbar ist, bewegbar ist. Weiterhin ist ein Arretierelement vorgesehen, welches in der Verriegelungsstellung des Feststellhebels einen Formschluss zwischen dem Halteelement und dem Stellelement bereitstellt. Erfindungsgemäß weist das Arretierelement eine Kulissenkontur auf, welche sich in der Verriegelungsstellung des Feststellhebels an einem Kontaktabschnitt des Feststellhebels oder an einem Kontaktabschnitt, der mit dem Feststellhebel drehfest verbunden ist, gegen den Hub der Verriegelungseinrichtung abstützt.
Wie bei dem als gattungsbildend zugrunde gelegten Stand der Technik führt eine Verschwenkung des Feststellhebels zu einer Verdrehung des drehfest damit verbundenen Klemmbolzens, die einen Hub der Verriegelungseinrichtung in Richtung der Erstreckung des Klemmbolzens bewirkt, d.h. einen Hub in axialer Richtung bezüglich des Klemmbolzens. Das Arretierelement stützt sich erfindungsgemäß mit der Kulissenkontur gegen diesen Klemmhub in axialer Richtung an dem Kontaktabschnitt ab. Dadurch wird das Arretierelement beim Verriegeln der Verriegelungseinrichtung in axialer Richtung, also in Richtung der Erstreckung des Klemmbolzens, in die Formschlussstellung gebracht.
Durch das Bereitstellen des Arretierelements derart, dass es eine Kulissenkontur aufweist, welche sich in der Verriegelungsstellung des Feststellhebels an einem Kontaktabschnitt des Feststellhebels abstützt, wird erreicht, dass die Verriegelung beziehungsweise Vorspannung des Arretierelements in die Formschlussstellung unabhängig vom Hub der Verriegelungseinrichtung ist.

Vielmehr tritt das Arretierelement beziehungsweise dessen Kulissenkontur in direkten Kontakt mit dem Feststellhebel beziehungsweise dessen Kontaktabschnitt, so dass eine Vorspannung des Arretierelementes ausschließlich durch den direkten Kontakt des Feststellhebels mit dem Arretierelement bereitgestellt wird. Dadurch wird das Arretierelement zur Bereitstellung des Formschlusses vorgespannt.

Der durch die Verriegelungseinrichtung bereitgestellte Hub ist hier sekundär, das Arretierelement wird lediglich durch das Bewegen des Feststellhebels von der geöffneten Position in die Verriegelungsposition in seinen verriegelten, den Formschluss bereitstellenden Zustand vorgespannt. Die Bewegung des Feststellhebels kann entsprechend auch eine kleine Bewegung sein, so dass die Verriegelungseinrichtung auch bei einem geringen Hub betätigt werden kann, welcher zum Bereitstellen eines Kraftschlusses zwischen dem Halteelement und dem Stellelement ausreichend ist. Beim Betätigen der Verriegelungseinrichtung wird das Arretierelement in Richtung des Hubs bewegt, das entspricht der axialen Richtung des Klemmbolzens.

Weiterhin wird auf diese Weise ermöglicht, dass die Verriegelungseinrichtung insgesamt mit einem kleinen Hub ausgebildet werden kann, da das in Eingriff bringen beziehungsweise Lösen des Arretierelements aus seinem Formschluss zwischen Haltelement und Stellelement, beispielsweise einer Gegenverzahnung, nicht über diesen Hub bewerkstelligt werden muss. Entsprechend kann auch bei einem geringen Hub der Verriegelungseinrichtung eine Verklemmung des Stellelementes gegenüber dem Halteelement gelöst werden, so dass dennoch eine hakelfreie Verstellung des Stellelements gegenüber dem Halteelement möglich ist.

Dies kann auch dadurch unterstützt werden, dass das Arretierelement beziehungsweise dessen Kulissenkontur nur im letzten Bereich des Verschwenkwinkels vor dem vollständigen Verriegeln des Feststellhebels mit dem entsprechenden Kontaktabschnitt des Feststellhebels in Kontakt kommt. In den anderen Positionen des Feststellhebels ist die Kulissenkontur entsprechend nicht mit dem Kontaktabschnitt des Feststellhebels in Kontakt, so dass das Arretierelement frei ist. Damit kann das Arretierelement sicher aus dem Eingriff mit dem entsprechenden Formschluss, beispielsweise der Gegenverzahnung, herausbewegt werden.

Bevorzugt ist die Kulissenkontur so ausgebildet, dass das Arretierelement durch den Kontakt mit dem Kontaktabschnitt des Feststellhebels zur Erzeugung bzw. Bereitstellung des Formschlusses vorgespannt ist. So kann ein sicheres Eingreifen der Formschlusselemente erreicht werden, auch wenn eine Zahn-auf-Zahn Situation beim Verriegeln der Verriegelungseinrichtung vorliegen sollte. Durch die Vorspannung kann dann eine sichere Herstellung des Formschlusses erreicht werden, sobald auch nur eine geringe Bewegung des Stellelements gegenüber dem Halteelement auftritt, da die Formschlusselemente dann unmittelbar miteinander in Kontakt treten.

Zur Ausbildung der Vorspannung und um das Arretierelement durch den Kontakt mit dem Kontaktabschnitt des Feststellhebels von einer offenen Position in eine Formschlussposition zu bewegen, ist die Kulissenkontur bevorzugt rampenförmig ausgebildet.

Um einen sicheren Formschluss bereitstellen zu können, weist das Arretierelement bevorzugt eine Verzahnung auf, die mit einer Gegenverzahnung des Halteelements zur Ausbildung des Formschlusses in Eingriff bringbar ist.

In einer bevorzugten Weiterbildung weist das Arretierelement einen Anbindungsabschnitt auf, über welchen es an dem Stellelement angebunden ist, wobei der Anbindungsabschnitt besonders bevorzugt eine Ausnehmung aufweist, welche von einem Klemmbolzen zum Aufbringen einer Klemmkraft in der Verriegelungsstellung des Feststellhebels durchdrungen ist. Durch die Bereitstellung des Anbindungsabschnitts wird das Arretierelement am Stellelement gehalten und bewegt sich zusammen mit diesem in zumindest einer Verstellrichtung. Findet ein Formschluss zwischen dem Arretierelement und dem Halteelement statt, so wird entsprechend auch ein Formschluss zwischen dem Halteelement und dem Stellelement vermittels des Arretierelements ausgebildet.

Bevorzugt weist das Arretierelement einen Formschlusselemente, besonders bevorzugt eine Verzahnung, aufnehmenden Verriegelungsabschnitt auf, welcher die Kulissenkontur umfasst und welcher über einen federnden Abschnitt mit einem am Stellelement angebundenen Anbindungsabschnitt des Arretierelements verbunden ist, besonders bevorzugt einstückig verbunden. Auf diese Weise ist der Verriegelungsabschnitt vom Anbindungsabschnitt über einen federnden Abschnitt verbunden, so dass der Verriegelungsabschnitt unabhängig vom Anbindungsabschnitt aus der Formschlussposition heraus vorgespannt sein kann.

In einer bevorzugten Weiterbildung weist die Verriegelungseinrichtung einen Klemmmechanismus, besonders bevorzugt einen Keilscheiben aufweisenden Mechanismus oder einen Nockenmechanismus, auf, welcher auf einen Anbindungsabschnitt des Arretierelements wirkt. Ein Verriegelungsabschnitt des Arretierelements ist unabhängig von dem Klemmmechanismus über den Kontakt des Kontaktabschnitts des Feststellhebels mit der Kulissenkontur zur Erzeugung des Formschlusses vorgespannt. Entsprechend findet eine Entkopplung der Verriegelung des Stellelements gegenüber dem Halteelement über die Verriegelungseinrichtung, beispielsweise über eine Klemmung, und einer Vorspannung des Arretierelements in die Formschlussposition statt. Die Bewegung des Arretierelements in die Formschlussposition ist entsprechend unabhängig von der Verriegelung der Verriegelungseinrichtung und insbesondere unabhängig vom Klemmhub der Verriegelungseinrichtung, welche diese zum Verriegeln des Stellelements gegenüber dem Halteelement bereitstellt.

Bevorzugt weist das Arretierelement einen federnden Abschnitt auf, welcher ein Herausdrücken beziehungsweise Herauslösen des Arretierelements aus der entsprechenden Gegenverzahnung dann sicher bewerkstelligt, wenn der Feststellhebel nicht mit der Kulissenkontur des Arretierelements in Kontakt steht. Durch den federnden Abschnitt ist das Arretierelement entsprechend aus seiner Formschlussposition, in welcher es mit der Gegenverzahnung in Eingriff steht, heraus so vorgespannt, dass sichergestellt werden kann, dass in der Öffnungsposition eine problemlose Verstellung des Stellelements gegenüber dem Halteelement erreicht werden kann.

Entsprechend ist die Lenksäule unabhängig vom (Klemm-)Hub der Verriegelungseinrichtung beziehungsweise vom Klemmsystem der Verriegelungseinrichtung, da die Betätigung des Arretierelementes durch den Verriegelungshebel selbst, aber nicht durch den Hub des Klemmsystems erfolgt.

Das Arretierelement weist bevorzugt einen Halteabschnitt auf, an welchem es an dem Stellelement gehalten ist, um mit dem Stellelement gemeinsam verstellbar angeordnet zu sein. Hierzu wird der Halteabschnitt des Arretierelements besonders bevorzugt von dem Klemmbolzen durchdrungen, welcher seinerseits mit dem Stellelement verschwenkbar angeordnet ist. Entsprechend bewegt sich das Arretierelement zusammen mit dem Klemmbolzen in der Verschwenkrichtung beziehungsweise Höhenrichtung, wenn das Stellelement in der Höhenrichtung verstellt wird. Hierdurch wird auch sichergestellt, dass das Arretierelement stets in einer definierten Position zum Verriegelungshebel geführt ist, so dass ein sicheres Eingreifen des Kontaktabschnittes des Feststellhebels mit der Kulissenkontur des Arretierelementes in jeder möglichen Verschwenkposition des Stellelementes erreicht wird.

Bevorzugt führt der Feststellhebel zwischen der Verriegelungsstellung und der Öffnungsstellung eine Rotationsbewegung oder eine Translationsbewegung durch, so dass die unterschiedlichsten Verriegelungseinrichtungen mit dem vorgestellten Arretierelement kompatibel sind.

Das Arretierelement ist mit Vorteil als federndes Blechteil ausgebildet, um eine einfache und sichere Ausbildung zu erreichen.

### Kurze Beschreibung der Figuren

Bevorzugte weitere Ausführungsformen und Aspekte der vorliegenden Erfindung werden durch die nachfolgende Beschreibung der Figuren näher erläutert. Dabei zeigen:
- Figur 1: eine schematische perspektivische Ansicht einer Lenksäule für ein Kraftfahrzeug in einer verriegelten Position der Verriegelungseinrichtung;
- Figur 2: eine schematische perspektivische Ansicht der Lenksäule aus Figur 1 mit einer teilweise auseinandergezogenen Verriegelungseinrichtung;
- Figur 3: eine schematische perspektivische Ansicht eines Arretierelements;
- Figur 4: eine schematische perspektivische Detaildarstellung der Wechselwirkung des Feststellhebels mit dem Arretierelement in einer Verriegelungsposition;
- Figur 5: eine schematische perspektivische Darstellung eines Details der Verriegelungseinrichtung mit einem Feststellhebel und dem Arretierelement in einer Öffnungsstellung; und
- Figur 6: eine schematische perspekivische Ansicht einer alternativen Ausführungsform der Erfindung mit einer teilweise auseinandergezogenen Verriegelungseinrichtung, analog zur Darstellung in Figur 2.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente mit identischen Bezugszeichen bezeichnet. Um Redundanzen zu vermeiden, wird auf eine wiederholte Beschreibung dieser Elemente in der nachfolgenden Beschreibung teilweise verzichtet.

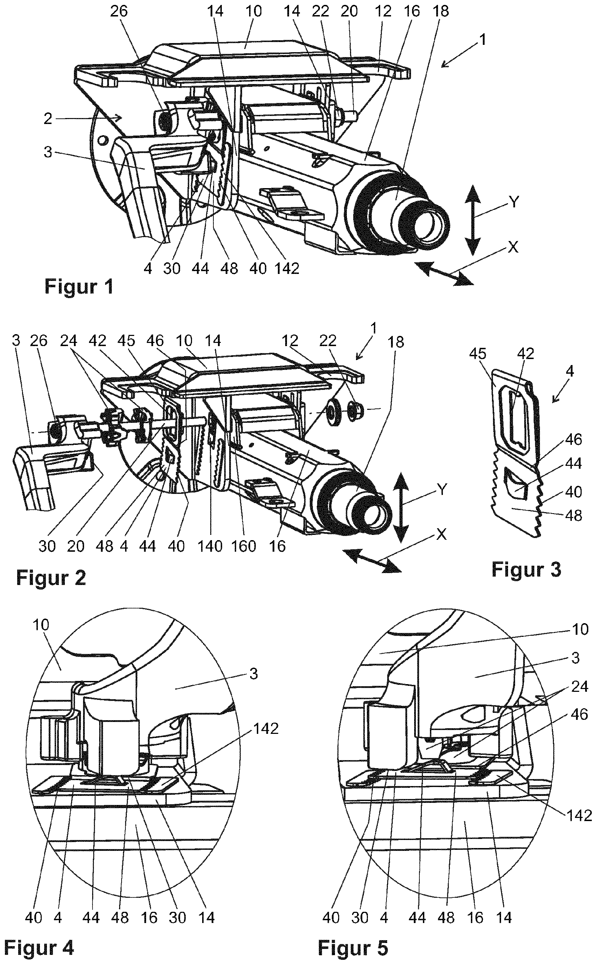

In Figur 1 ist eine Lenksäule 1 in einer schematischen perspektivischen Ansicht gezeigt. Die Lenksäule 1 umfasst ein Halteelement 10, welches in Form einer Konsole ausgebildet ist und welches über Montageausnehmungen 12 am Chassis eines Kraftfahrzeuges festlegbar ist.

Das Halteelement 10 weist weiterhin Seitenwangen 14 auf, welche sich im montierten Zustand nach unten hin erstrecken und welche ein gegenüber dem Halteelement 10 verstellbares Stellelement 16 zwischen sich aufnehmen. Das Stellelement 16 ist in einer Höhenrichtung Y und einer Längsrichtung X gegenüber dem Halteelement 10 verstellbar. Das Stellelement 16 lagert in an sich bekannter Weise eine Lenkspindel 18, an welcher ein nicht dargestelltes Lenkrad angebunden werden kann. Durch eine Verstellung in Höhenrichtung Y, also eine Verschwenkung des Stellelementes 16 um eine im hinteren Bereich des Stellelementes 16 angeordnete, hier nicht gezeigte, Verschwenkachse, kann entsprechend eine Höhenverstellung des an der Lenkspindel 18 angebundenen Lenkrades durchgeführt werden. Weiterhin ist es möglich, das Stellelement 16 in Längsrichtung X, welche der Achsenrichtung der Lenkspindel 18 entspricht, zu verschieben, um eine Längsverstellung der Position des Lenkrades zu ermöglichen.

Eine Verstellung des Stellelements 16 in Höhenrichtung Y sowie eine Bewegung des Stellelementes 16 in Längsrichtung X muss zumindest während des regulären Fahrbetriebes verhindert werden. Hierzu ist eine Verriegelungseinrichtung 2 vorgesehen, welche in einer auseinandergezogenen Darstellung in Figur 2 detailliert zu erkennen ist. Die Verriegelungseinrichtung 2 umfasst einen Klemmbolzen 20, welcher sich durch ein in Verschwenkrichtung erstreckendes Langloch 140 in den Seitenwangen 14 des Halteelementes 10 erstreckt. Der Klemmbolzen 20 durchdringt weiterhin Haltelaschen 160 des Stellelementes 16, wobei er in den Haltelaschen 160 des Stellelementes so in einer Bohrung geführt ist, dass er bei einer Bewegung des Stellelementes 16 in Höhenrichtung Y zusammen mit dem Stellelement 16 bewegt wird. Der Klemmbolzen 20 bewegt sich dann entlang des Langlochs 140.

Der Klemmbolzen 20 ist auf seiner einen Seite mit einer Kontermutter 22 verschlossen. Auf der anderen Seite ist ein Nockenmechanismus mit zwei Keilscheiben 24 vorgesehen, welche gegeneinander rotiert werden können, um auf diese Weise einen Klemmhub bereitzustellen.

Die Rotation der Keilscheiben 24 gegeneinander wird mittels eines Feststellhebels 3 bewirkt, welcher über eine Feststellmutter 26 ebenfalls an dem Klemmbolzen 20 angebracht ist. Eine Verschwenkung des Feststellhebels 3 von einer Öffnungsposition in eine Verriegelungsposition führt entsprechend zu einer Relativbewegung der Keilscheiben 24 gegeneinander und damit zu einem entsprechenden Klemmhub. Dieser Klemmhub bewirkt, dass sich die Kontermutter 22 auf die innere der Keilscheiben 24 zu bewegt, so dass die Seitenwangen 14 durch den auf diese Weise erzeugten Klemmhub aufeinander zu bewegt werden und entsprechend das Stellelement 16 in der dann vorliegenden Position einklemmen. Ein solches Klemmsystem ist prinzipiell aus dem Stand der Technik bekannt.

Um im Crash-Fall für eine sichere Verriegelung des Stellelementes 16 gegenüber dem Halteelement 10 im Beispiel in Höhenrichtung Y zu sorgen, ist ein Arretierelement 4 vorgesehen, welches einen Verriegelungsabschnitt 48 aufweist, der an zwei gegenüberliegenden Seiten, welche sich in Höhenrichtung beziehungsweise in Richtung der Ausdehnung des Langloches 140 erstrecken, jeweils eine Verzahnung 40 aufweist. Die Verzahnung 40 des Arretierelementes 4 kommt im Verriegelungszustand der Verriegelungseinrichtung 2 in Eingriff mit einer entsprechenden Gegenverzahnung 142, welche auf der dem Feststellhebel 3 zugewendeten Außenseite der dem Klemmhebel 3 zugewendeten Seitenwange 14 fest angeordnet ist. Durch den Eingriff der Verzahnung 40 des Arretierelementes 4 mit der Gegenverzahnung 142, welche an der Seitenwange 14 fest ist, kann eine Verriegelung des Arretierelementes 4 bezüglich des Halteelementes 10 erreicht werden.

Neben der hier gezeigten Verzahnung 40 und der Gegenverzahnung 142 können beliebige andere Formen und Geometrien verwendet werden, welche einen Formschluss des Arretierelements 4 mit dazu komplementären Strukturen am Halteelement 10 ermöglichen.

Das Arretierelement 4 weist weiterhin einen Anbindungsabschnitt 45 auf, über welchen es an dem Stellelement 16 angebunden ist. Dazu weist der Anbindungsabschnitt 45 in dem gezeigten Ausführungsbeispiel eine Ausnehmung 42 auf, durch welche hindurch der Klemmbolzen 20 tritt, der an dem Stellelement 16 angebunden ist. Entsprechend ist der Anbindungsabschnitt 45 des Arretierelements 4 ebenfalls an dem Stellelement 16 angebunden und bewegt sich mit diesem zumindest in der Höhenrichtung Y.

In dem gezeigten Ausführungsbeispiel ist die Ausnehmung 42 des Anbindungsabschnitts 45 so ausgestaltet, dass sie gleichzeitig formschlüssig mit einem Formschlussbereich der direkt an ihr anliegenden Keilscheibe 24 in Eingriff kommt. Entsprechend ist die Keilscheibe 24 verdrehsicher in der Ausnehmung 42 des Arretierelementes 4 gehalten. Die Keilscheibe 24 durchdringt weiterhin mit ihrem Formschlussbereich die Ausnehmung 42 des Arretierelementes 4 und tritt in das Langloch 140 ein, um auf diese Weise eine Verdrehsicherung sowohl des Arretierelementes 4 als auch der Keilscheibe 24 selbst gegenüber dem Halteelement 10 bereitzustellen.

Das Arretierelement 4 stellt entsprechend, wenn seine Verzahnung 40 formschlüssig in Eingriff mit der Gegenverzahnung 142 an der Seitenwange 14 steht, eine Arretierung des Klemmbolzens 20 in Richtung des Langlochs 140 bereit, derart, dass auch das an dem Klemmbolzen 20 gehaltene Stellelement 16 in der Höhenrichtung Y arretiert ist.

Um das Arretierelement 4 und insbesondere die Verzahnung 40 formschlüssig in Eingriff mit der Gegenverzahnung 142 zu bringen, weist das Arretierelement 4 eine Kulissenkontur 44 auf, welche mit einem Kontaktabschnitt 30 des Feststellhebels in Kontakt kommt, wie beispielsweise in Figur 4 gezeigt.

Bei einer entsprechenden Drehstellung des Feststellhebels 3, insbesondere in der verriegelten Stellung des Feststellhebels 3, kommt entsprechend durch das Kontaktieren des Kontaktabschnittes 30 mit der Kulissenkontur 44 des Arretierelementes 4 die Verzahnung 40 des Arretierelementes 4 in formschlüssigen Eingriff mit der Gegenverzahnung 142, wobei eine Vorspannung in Richtung des Eingriffs des Formschlusses auf das Arretierelement 4 aufgebracht wird. Das Arretierelement 4 weist in verriegelter Stellung des Feststellhebels 3 somit eine Vorspannung auf, wobei diese Vorspannung eine Rückstellbewegung des Arretierelement 4 aus dem Formschlusses heraus bereitstellt, sobald der Feststellhebel 3 in die geöffnete Position überführt wird.

Der Kontaktabschnitt 30 des Feststellhebels 3 ist bevorzugt nur in einem Endbereich der Verschwenkbewegung des Feststellhebels 3 in die Verriegelungsstellung vorgesehen. Ist der Feststellhebel 3 jedoch in der geöffneten Position, so wie er beispielsweise in Figur 5 gezeigt ist, steht der Kontaktabschnitt 30 mit der Kulissenkontur 44 des Arretierelementes 4 nicht in Eingriff. Entsprechend findet auch kein Anpressen oder Vorspannen des Arretierelementes 4 in die Verriegelungsstellung statt, wenn der Feststellhebel 3 in der geöffneten Position ist.

Aus Figur 5 ergibt sich weiterhin, dass die Verzahnung 40 dann aus der Gegenverzahnung 142 abgehoben ist, so dass eine Höhenverstellung des Stellelements 16 ermöglicht wird, ohne durch das Arretierelement 4 behindert zu werden.

In einer nicht dargestellten Ausführungsvariante kann in der geöffneten Position des Feststellhebels das Arretierelement noch durch den Kontaktabschnitt leicht vorgespannt sein, wobei der Formschluss nicht in Eingriff steht und somit eine Verstellung des Stellelements gegenüber dem Halteelement ermöglicht wird. Eine leichte Vorspannung des Arretierelements reduziert ein Spiel des Feststellhebels in der geöffneten Position.

In einer nicht dargestellten Ausführungsvariante umfasst der Feststellhebel einen oder mehrere Wälzkörper, vorzugsweise eine Zylinderrolle oder eine Kugel, wobei dieser zumindest eine Wälzkörper den Kontaktabschnitt des Feststellhebels ausbildet und mit der Kulissenkontur des Arretierelements zusammenwirkt.

Um ein zuverlässiges Lösen des Formschlusses zu ermöglichen, ist ein federnder Abschnitt 46 im Arretierelement 4 so vorgesehen, dass die Verzahnung 40 aus der Gegenverzahnung 142 abhebt, wenn der Kontaktabschnitt 30 des Feststellhebels 3 nicht mit der Kulissenkontur 44 des Arretierelementes 4 in Kontakt steht. Mit anderen Worten federt das Arretierelement 4 in der geöffneten Position des Feststellhebels 3, so wie sie beispielsweise in Figur 5 gezeigt ist, aus der Arretierstellung heraus und gibt die Verstellbewegung des Stellelementes 16 gegenüber dem Halteelement 10 frei.

Das Arretierelement 4 weist dabei einen Anbindungsabschnitt 45 auf, über welchen es an dem Stellelement 16 angebunden ist. Der Anbindungsabschnitt 45 weist in dem gezeigten Ausführungsbeispiel eine Ausnehmung 42 auf, welche von dem Klemmbolzen 20 zum Aufbringen einer Klemmkraft in der Verriegelungsstellung des Feststellhebels 3 durchdrungen ist.

Weiterhin weist das Arretierelement 4 einen Formschlusselemente, in dem gezeigten Ausführungsbeispiel eine Verzahnung 40, aufnehmenden Verriegelungsabschnitt 48 auf, welcher die Kulissenkontur 44 umfasst und welcher über einen federnden Abschnitt 46 mit dem am Stellelement 16 angebundenen Anbindungsabschnitt 45 verbunden ist.

Damit ist es entsprechend möglich, das Arretierelement 4 als Blechteil aus einem federnden Metall, beispielsweise einem Federstahl, einstückig auszubilden, bevorzugt als Stanz- und Biegeteil.

So kann erreicht werden, dass, obwohl die Verriegelungseinrichtung 2 einen Klemmmechanismus, bevorzugt einen Keilscheiben 24 aufweisenden Mechanismus oder einen Nockenmechanismus, aufweist, welcher auf den Anbindungsabschnitt 45 des Arretierelements 4 wirkt, ein Verriegelungsabschnitt 48 des Arretierelements 4 unabhängig von dem Klemmmechanismus über den Kontakt des Kontaktabschnitts 30 des Feststellhebels 3 mit der Kulissenkontur 44 zur Erzeugung des Formschlusses vorgespannt ist. Die Kulissenkontur 44 kann in vorteilhafter Weise ebenfalls federnd ausgebildet sein, so dass diese mittels des Kontaktabschnitts 30 des Feststellhebels 3 vorspannbar ist und somit die Möglichkeit fertigungs- und verschleißbedingte Abweichungen auszugleichen ohne die Erzeugung des Formschlusses entgegenzutreten. Die federnde Kulissenkontur 44 und der federnde Abschnitt 46 sind so auszulegen, dass die Funktion des Arretierelements 4 gewährleistet ist. Der (Klemm-) Hub der Verriegelungseinrichtung 2 kann entsprechend klein gehalten werden und hat keinen Einfluss auf die Funktion des Arretierelements 4.
Das Arretierelement kann in völlig analoger Weise auch zur Arretierung in die Längsrichtung X eingesetzt werden. Hierzu müssen nur die Formschlusselemente insbesondere die Verzahnungen in die X-Richtung ausgerichtet sein.
Auch eine Kombination von zwei Arretierelementen, eines für die Höhenrichtung Y und eines für die Längsrichtung X ist denkbar und möglich.

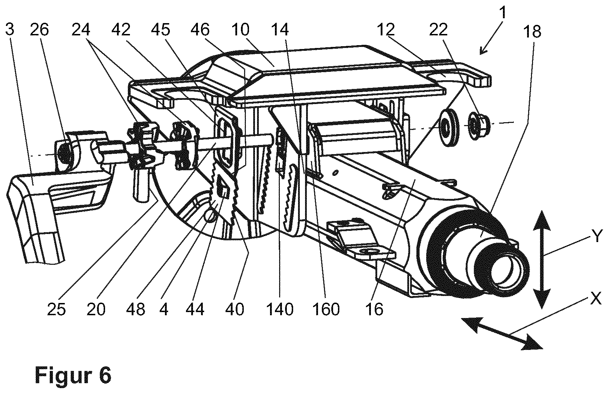

In der Figur 6 ist eine alternative Ausführungsform der Erfindung dargestellt, die abweichend von der in der Figur 2 dargestellten Ausführungsform als Kontaktabschnitt einen Kontaktabschnitt 25 aufweist, der mit der Kulissenkontur 44 zusammenwirkt, der nicht direkt am Feststellhebel 3 angeordnet ist, sondern an der Keilscheibe 24, die drehfest mit dem Feststellhebel 3 verbunden ist, angeordnet ist. Dadurch ist der Kontaktabschnitt 25 drehfest mit dem Feststellhebel 3 verbunden. Um das Arretierelement 4 und insbesondere die Verzahnung 40 formschlüssig in Eingriff mit der Gegenverzahnung 142 zu bringen, wird völlig analog zur Darstellung von Figur 2 bei der Verdrehung des Feststellhebels 3 die Kulissenkontur 44 am Arretierelement 4 mit dem Kontaktabschnitt 25 in Kontakt gebracht.

### Bezugszeichenliste

- 1: Lenksäule
- 10: Haltelement
- 12: Montageausnehmung
- 14: Seitenwange
- 16: Stellelement
- 18: Lenkspindel
- 140: Langloch
- 142: Gegenverzahnung
- 160: Haltelasche
- 2: Verriegelungseinrichtung
- 20: Klemmbolzen
- 22: Kontermutter
- 24: Keilscheibe
- 25: Kontaktabschnitt
- 26: Feststellmutter
- 3: Feststellhebel
- 30: Kontaktabschnitt
- 4: Arretierelement
- 40: Verzahnung
- 42: Ausnehmung
- 44: Kulissenkontur
- 45: Anbindungsabschnitt
- 46: federnder Abschnitt
- 48: Verriegelungsabschnitt
- X: Längsrichtung
- Y: Höhenrichtung

## Patentansprüche

1. Lenksäule (1) für ein Kraftfahrzeug, umfassend ein am Chassis des Kraftfahrzeugs festlegbares Halteelement (10), ein gegenüber dem Halteelement (10) verstellbares Stellelement (16) zur Aufnahme einer Lenkspindel (18) und eine Verriegelungseinrichtung (2) zum Verriegeln des Stellelements (16) gegenüber dem Haltelement (10), wobei die Verriegelungseinrichtung (2) einen Feststellhebel (3) aufweist, der zwischen einer Verriegelungsstellung, in welcher das Stellelement (16) bezüglich des Halteelementes (10) verriegelt ist, und einer Öffnungsstellung, in welcher das Stellelement (16) bezüglich des Halteelements (10) verstellbar ist, bewegbar ist, wobei weiterhin ein Arretierelement (4) vorgesehen ist, welches in der Verriegelungsstellung des Feststellhebels (3) einen Formschluss zwischen dem Halteelement (10) und dem Stellelement (16) bereitstellt,
**dadurch gekennzeichnet, dass**
das Arretierelement (4) eine Kulissenkontur (44) aufweist, welche sich in der Verriegelungsstellung des Feststellhebels (3) an einem Kontaktabschnitt (30) des Feststellhebels (3) oder an einem Kontaktabschnitt (25), der mit dem Feststellhebel (3) drehfest verbunden ist, gegen den Hub der Verriegelungseinrichtung (2) abstützt.

2. Lenksäule (1) gemäß Anspruch 1, **dadurch gekennzeichnet, dass** die Kulissenkontur (44) so ausgebildet ist, dass das Arretierelement (4) durch den Kontakt mit dem Kontaktabschnitt (30) des Feststellhebels (3) zur Bereitstellung des Formschlusses vorgespannt ist.

3. Lenksäule (1) gemäß Anspruch 1 oder 2, **dadurch gekennzeichnet, dass** die Kulissenkontur (44) rampenförmig ausgebildet ist, um das Arretierelement (4) durch den Kontakt mit dem Kontaktabschnitt (30) des Feststellhebels (3) von einer offenen Position in eine Formschlussposition zu bewegen.

4. Lenksäule (1) gemäß einem der vorstehenden Ansprüche, **dadurch gekennzeichnet, dass** das Arretierelement (4) eine Verzahnung (40) aufweist, die mit einer Gegenverzahnung (142) des Halteelements (10) zur Ausbildung des Formschlusses in Eingriff bringbar ist.

5. Lenksäule (1) gemäß einem der vorstehenden Ansprüche, **dadurch gekennzeichnet, dass** das Arretierelement (4) einen Anbindungsabschnitt (45) aufweist, über welchen es an dem Stellelement (16) angebunden ist, wobei der Anbindungsabschnitt (45) bevorzugt eine Ausnehmung (42) aufweist, welche von einem Klemmbolzen (20) zum Aufbringen einer Klemmkraft in der Verriegelungsstellung des Feststellhebels (3) durchdrungen ist.

6. Lenksäule (1) gemäß einem der vorstehenden Ansprüche, **dadurch gekennzeichnet, dass** das Arretierelement (4) einen Formschlusselemente, bevorzugt eine Verzahnung (40), aufnehmenden Verriegelungsabschnitt (48) aufweist, welcher die Kulissenkontur (44) umfasst und welcher über einen federnden Abschnitt (46) mit einem am Stellelement (16) angebundenen Anbindungsabschnitt (45) verbunden ist.

7. Lenksäule (1) gemäß einem der vorstehenden Ansprüche, **dadurch gekennzeichnet, dass** die Verriegelungseinrichtung (2) einen Klemmmechanismus, bevorzugt einen Keilscheiben (24) aufweisenden Mechanismus oder einen Nockenmechanismus, aufweist, welcher auf einen Anbindungsabschnitt (45) des Arretierelements (4) wirkt, und ein Verriegelungsabschnitt (48) des Arretierelements (4) unabhängig von dem Klemmmechanismus über den Kontakt des Kontaktabschnitts (30) des Feststellhebels (3) mit der Kulissenkontur (44) zur Erzeugung des Formschlusses vorgespannt ist.

8. Lenksäule (1) gemäß einem der vorstehenden Ansprüche, **dadurch gekennzeichnet, dass** der Feststellhebel (3) zwischen der Verriegelungsstellung und der Öffnungsstellung eine Rotationsbewegung oder eine Translationsbewegung durchführt.

9. Lenksäule (1) gemäß einem der vorstehenden Ansprüche, **dadurch gekennzeichnet, dass** das Arretierelement (4) als federndes Blechteil ausgebildet ist.

10. Lenksäule (1) gemäß einem der vorstehenden Ansprüche, **dadurch gekennzeichnet, dass** das Arretierelement (4) einen federnden Abschnitt (46) aufweist, welcher das Arretierelement (4) aus dem Formschluss heraus vorspannt.

## Claims

1. Steering column (1) for a motor vehicle, comprising a holding element (10), which can be secured on the chassis of the motor vehicle, an adjustment element (16), which is adjustable in relation to the holding element (10), for receiving a steering shaft (18), and a locking device (2) for locking the adjustment element (16) in relation to the holding element (10), wherein the locking device (2) comprises a clamping lever (3), which is movable between a locking position, in which the adjustment element (16) is locked with respect to the holding element (10), and an open position, in which the adjustment element (16) is adjustable with respect to the holding element (10), wherein, furthermore, a retaining element (4) is provided, which retaining element provides a form-fitting connection between the holding element (10) and the adjustment element (16) in the locking position of the clamping lever (3),
**characterized in that**
the retaining element (4) comprises a slotted guide contour (44), which, in the locking position of the clamping lever (3), is supported against the stroke of the locking device (2) on a contact section (30) of the clamping lever (3) or on a contact section (25) connected for conjoint rotation to the clamping lever (3).

2. Steering column (1) according to Claim 1,
**characterized in that** the slotted guide contour (44) is designed in such a way that the retaining element (4) is preloaded by the contact with the contact section (30) of the clamping lever (3) in order to provide the form-fitting connection.

3. Steering column (1) according to Claim 1 or 2,
**characterized in that** the slotted guide contour (44) is of ramp-shaped design in order to move the retaining element (4) from an open position into a form-fitting position through the contact with the contact section (30) of the clamping lever (3).

4. Steering column (1) according to one of the preceding claims, **characterized in that** the retaining element (4) comprises toothing (40), which can be brought into engagement with mating toothing (142) on the holding element (10) to form the form-fitting connection.

5. Steering column (1) according to one of the preceding claims, **characterized in that** the retaining element (4) comprises an attachment section (45), by means of which it is attached to the adjustment element (16), wherein the attachment section (45) preferably comprises an aperture (42), which is penetrated by a clamping pin (20) for applying a clamping force in the locking position of the clamping lever (3).

6. Steering column (1) according to one of the preceding claims, **characterized in that** the retaining element (4) comprises a locking section (48) which accommodates form-fitting elements, preferably toothing (40), which locking section comprises the slotted guide contour (44) and which is connected by means of a springy section (46) to an attachment section (45) attached to the adjustment element (16).

7. Steering column (1) according to one of the preceding claims, **characterized in that** the locking device (2) comprises a clamping mechanism, preferably a mechanism that comprises wedging disks (24) or a cam mechanism, which mechanism acts on an attachment section (45) of the locking element (4), and a locking section (48) of the locking element (4) is preloaded independently of the clamping mechanism by means of the contact of the contact section (30) of the clamping lever (3) with the slotted guide contour (44) in order to produce the form-fitting connection.

8. Steering column (1) according to one of the preceding claims, **characterized in that** the clamping lever (3) performs a rotary motion or a translational motion between the locking position and the open position.

9. Steering column (1) according to one of the preceding claims, **characterized in that** the retaining element (4) is designed as a springy sheet-metal part.

10. Steering column (1) according to one of the preceding claims, **characterized in that** the retaining element (4) comprises a springy section (46), which preloads the retaining element (4) out of the form-fitting connection.

## Revendications

1. Colonne de direction (1) pour un véhicule automobile, comprenant un élément de maintien (10) pouvant être fixé au châssis du véhicule automobile, un élément de réglage (16) déplaçable par rapport à l'élément de maintien (10) destiné à recevoir une broche de direction (18) et un dispositif de verrouillage (2) pour verrouiller l'élément de réglage (16) par rapport à l'élément de maintien (10), dans lequel le dispositif de verrouillage (2) présente un levier de blocage (3), qui est mobile entre une position de verrouillage, dans laquelle l'élément de réglage (16) est verrouillé par rapport à l'élément de maintien (10), et une position d'ouverture, dans laquelle l'élément de réglage (16) est déplaçable par rapport à l'élément de maintien (10), dans lequel en outre il est prévu un élément d'arrêt (4), qui crée dans la position de verrouillage du levier de blocage (3) un emboîtement entre l'élément de maintien (10) et l'élément de réglage (16), **caractérisée en ce que** l'élément d'arrêt (4) présente un contour de coulisse (44), qui dans la position de verrouillage du levier de blocage (3) s'appuie contre la levée du dispositif de verrouillage (2) sur une partie de contact (30) du levier de blocage (3) ou sur une partie de contact (25), qui est assemblée sans rotation au levier de blocage (3).

2. Colonne de direction (1) selon la revendication 1, **caractérisée en ce que** le contour de coulisse (44) est configuré de telle manière que l'élément d'arrêt (4) soit précontraint par le contact avec la partie de contact (30) du levier de blocage (3) pour créer l'emboîtement.

3. Colonne de direction (1) selon la revendication 1 ou 2, **caractérisée en ce que** le contour de coulisse (44) est configuré en forme de rampe, afin de déplacer l'élément d'arrêt (4) d'une position ouverte à une position d'emboîtement par le contact avec la partie de contact (30) du levier de blocage (3).

4. Colonne de direction (1) selon l'une quelconque des revendications précédentes, **caractérisée en ce que** l'élément d'arrêt (4) présente une denture (40), qui peut être mise en prise avec une denture opposée (142) de l'élément de maintien (10) pour créer l'emboîtement.

5. Colonne de direction (1) selon l'une quelconque des revendications précédentes, **caractérisée en ce que** l'élément d'arrêt (4) présente une partie de liaison (45), par laquelle il est relié à l'élément de réglage (16), dans lequel la partie de liaison (45) présente de préférence un évidement (42), qui est traversé par un boulon de serrage (20) pour appliquer une force de serrage dans la position de verrouillage du levier de blocage (3).

6. Colonne de direction (1) selon l'une quelconque des revendications précédentes, **caractérisée en ce que** l'élément d'arrêt (4) présente une partie de verrouillage (48) comportant des éléments d'emboîtement, de préférence une denture (40), qui comprend le contour de coulisse (44) et qui est reliée par une partie élastique (46) à une partie de liaison (45) reliée à l'élément de réglage (16).

7. Colonne de direction (1) selon l'une quelconque des revendications précédentes, **caractérisée en ce que** le dispositif de verrouillage (2) présente un mécanisme de serrage, de préférence un mécanisme présentant des disques à coins (24) ou un mécanisme à cames, qui agit sur une partie de liaison (45) de l'élément d'arrêt (4), et une partie de verrouillage (48) de l'élément d'arrêt (4) est précontrainte indépendamment du mécanisme de serrage par le contact de la partie de contact (30) du levier de blocage (3) avec le contour de coulisse (44) pour la création de l'emboîtement.

8. Colonne de direction (1) selon l'une quelconque des revendications précédentes, **caractérisée en ce que** le levier de blocage (3) exécute entre la position de verrouillage et la position d'ouverture un mouvement de rotation ou un mouvement de translation.

9. Colonne de direction (1) selon l'une quelconque des revendications précédentes, **caractérisée en ce que** l'élément d'arrêt (4) est formé par une pièce de tôle élastique.

10. Colonne de direction (1) selon l'une quelconque des revendications précédentes, **caractérisée en ce que** l'élément d'arrêt (4) présente une partie élastique (46), qui précontraint l'élément d'arrêt (4) hors de l'emboîtement.
